# EUROPÄISCHE PATENTANMELDUNG

(11) **EP 2 008 872 A1**
(43) Veröffentlichungstag der Anmeldung: **31.12.2008**
(21) Anmeldenummer: 08010351.8
(22) Anmeldetag: 06.06.2008
(51) Int. Cl.: B60R 9/055

(54) **Kraftfahrzeugdach**

(30) Priorität: 26.06.2007 DE 102007029581
(71) Anmelder: GM Global Technology Operations, Inc., Detroit, MI 48265-3000 (US)
(72) Erfinder: Leopold, Frank, 65232 Taunusstein-Orlen (DE)
(74) Vertreter: Strauss, Peter

(57) **Zusammenfassung**

Ein Kraftfahrzeugdach 12 weist ein Basisdach 14 und ein Dachsegment 16 auf, wobei das Dachsegment 16 relativ zum Basisdach 14 bewegbar ist. Im geschlossenen Zustand liegt das Dachsegment 16 im Wesentlichen an dem Basisdachs 14 an. Im geöffneten Zustand ist das Dachsegment 16 zum Basisdach 14 beabstandet angeordnet. Erfindungsgemäß ist ein mit dem Basisdach 14 beweglich verbundener Spoiler 26 vorgesehen, der derart kinematisch mit dem Dachsegment 16 verbunden ist, dass durch die Bewegung des Spoilers 26 das Dachsegment 16 geöffnet und geschlossen werden kann, wobei im geöffneten zustand ein zusätzlicher Stauraum 28 zur Aufnahme von Gepäckstücken ausgebildet ist. Dadurch kann ohne die Sicherheit signifikant zu beeinträchtigen der Transport von Gegenständen verbessert werden.

## Beschreibung

Die Erfindung betrifft ein Kraftfahrzeugdach, insbesondere für ein Großraumpersonenkraftfahrzeug, wie beispielsweise Van, Kombi oder kleinbus, wobei das Kraftfahrzeugdach insbesondere ein Teil der Kraftfahrzeugkarosserie sein kann.

Aus DE 198 31 133 A1 ist ein Kraftfahrzeugdach bekannt, das ein Basisdach mit einem Dachhimmel aufweist. Inner-halb des Basisdachs ist ein Dachsegment vorgesehen, das sich über die gesamte Breite des Basisdachs erstreckt und aus dem Basisdach heraus geschwenkt werden kann. Im geschlossenen Zustand fluchtet das Dachsegment mit der Oberfläche des Basisdachs. Im geöffneten Zustand ist das Dachsegment im Wesentlichen parallel zur Ausgangslage an-geordnet, um einen kleinen Spalt zwischen dem Dachsegment und dem Basisdach auszubilden, der einen Druckausgleich im Kraftfahrzeuginnenraum ermöglicht für den Fall, dass ein oder mehrere Airbags ausgelöst werden.

Nachteilig bei einem derartigen Kraftfahrzeugdach ist, dass es sich bei dem beweglichen Dachsegment um ein sicherheitskritisches Bauteil handelt, das in seiner Funktion nicht beeinträchtigt werden darf. Insbesondere bei Großraumpersonenkraftfahrzeugen, wie beispielsweise Vans, Kombis oder Kleinbusen, ist dies nachteilig, da derartige Kraftfahrzeuge häufig zum Transport von Gegenständen, beispielsweise Gepäckstücken oder sperrigen Gegenständen verwendet werden. Für die Funktionalität insbesondere für ein Großraumpersonenkraftfahrzeugen ist es daher besonders wichtig, dass Gegenstände auch auf dem Dach transportiert werden können. Die Möglichkeit Gegenstände auf dem Dach zu transportieren wird jedoch durch ein in einem Notfall ausfahrbares Dachsegment deutlich beeinträchtigt, da im Bereich des Dachsegments aus Sicherheitsgründen keine Gegenstände transportiert werden können.

Es ist die Aufgabe der Erfindung ein Kraftfahrzeugdach zu schaffen, das ohne die Sicherheit signifikant zu beeinträchtigen den Transport von Gegenständen verbessert.

Die Lösung der Aufgabe erfolgt erfindungsgemäß durch die Merkmale des Anspruchs 1. Bevorzugte Weiterbildungen der Erfindung sind in den Unteransprüchen angegeben.

Das erfindungsgemäße Kraftfahrzeugdach, das insbesondere für ein Großraumpersonenkraftfahrzeug, beispielsweise Van, Kombi, Transporter bis 7,5 t oder Kleinbus, geeignet ist, weist ein Basisdach auf, durch das ein Dachhimmel des Kraftfahrzeugs ausgebildet sein kann. Ferner ist ein Dachsegment vorgesehen, das vorzugsweise im Wesentlichen vertikal relativ zum Basisdach bewegbar ist. Im geschlossenen Zustand liegt das Dachsegment im Wesentlichen, vorzugsweise absatzlos, an dem Basisdach an. Im geöffneten Zustand ist das Dachsegment relativ zum Basisdach beabstandet angeordnet. Erfindungsgemäß ist ein mit dem Basisdach beweglicher Spoiler verbunden. Der Spoiler ist hierbei derart kinematisch mit dem Dachsegment verbunden, dass durch die Bewegung des Spoilers das Dachsegment geöffnet und geschlossen werden kann, wobei im geöffneten Zustand ein zusätzlicher Stauraum zur Aufnahme von Gepäckstücken ausgebildet ist. Der zusätzliche Stauraum weist insbesondere das zwischen dem Basisdach und dem Dachsegment im Vergleich zum geschlossenen Zustand zusätzlich zugängliche Volumen auf, wobei vorzugsweise dieses Volumen durch das Dachsegment überdacht ist. Der Stauraum ist insbesondere derart dimensioniert, dass beispielsweise ein Koffer allein von dem zusätzlichen Stauraum aufgenommen werden kann.

Da der Spoiler mit dem Dachsegment verbunden ist, kann das Dachsegment bei Bedarf durch eine Bewegung des Spoilers geöffnet werden. Gleichzeitig verhindert der Spoiler, dass Fahrtwind über das geöffnete Dachsegment in den Kraftfahrzeuginnenraum hineindrückt. Dies erhöht den Komfort der Fahrzeuginsassen und ist insbesondere vorteilhaft, wenn bei auslösenden Airbags ein Druckausgleich erreicht werden soll, da ein unnötig hoher Gegendruck vermieden wird. Dadurch, dass das Dachsegment einen Stauraum ausbildet, wird der Transport von insbesondere sperrigen Gegenständen verbessert, da der zu transportierende Gegenstand beim Transport beispielsweise von dem Kraftfahrzeuginnenraum in den Stauraum hineinragen kann. Obwohl sich das Transportvolumen erhöht, erhöht sich durch den Spoiler der Luftwiderstand nicht wesentlich. Insbesondere kann der Spoiler immer nur so weit vom Basisdach abstehen, wie das Dachsegment ausgefahren ist, so dass ein unnötig hoher Luftwiderstand durch den Spoiler vermieden ist. Dadurch kann das Kraftfahrzeugdach insbesondere auch bei Kleinwagen, Sportwagen oder Supersportwagen verwendet werden, bei denen in der Regel kaum Stauraum vorgesehen ist. Da im geschlossenen Zustand das Kraftfahrzeugdach den Luftwiderstand kaum erhöht, wird bei für hohe Geschwindigkeiten ausgelegten Fachzeugen, wie insbesondere Sportwagen, die Höchstgeschwindigkeit kaum beeinträchtig, wobei im Bedarfsfall zusätzlicher Stauraum geschaffen werden kann, wenn es nicht auf die Höchstgeschwindigkeit sondern auf das zur Verfügung stehenden Transportvolumen ankommt. Da das Dachsegment einen so großen Abstand zum Basisdach einnehmen kann, dass Gepäckstücke in dem zusätzlichen Volumen aufgenommen werden können, ist es nicht erforderlich außerhalb des Kraftfahrzeugdachs auf der Oberfläche des Dachsegments Gepäckstücke zu befestigen, so dass der Transport von Gepäckstücken verbessert ist. Insbesondere bei länglichen und/oder sperrigen Gegenständen ist es möglich diese Gegenstände zwischen dem Dachsegment und dem Basisdach festzuklemmen, so dass eine zusätzliche Sicherung der Ladung erreicht wird.

Insbesondere ist der Spoiler um eine Schwenkachse relativ zum Basisdach schwenkbar, wobei die Schwenkachse vorzugsweise quer zur Fahrtrichtung verläuft. Mit dem Spoiler ist vorzugsweise eine Betätigungseinrichtung verbunden, um den Spoiler zu bewegen. Die zum Bewegen des Dachsegments erforderliche Bewegung des Spoilers kann dadurch durch einfache konstruktive Maßnahmen umgesetzt werden.

In einer besonders bevorzugten Ausführungsform weist das Basisdach und/oder das Dachsegment im Bereich des Stauraums ein bewegliches Dachelement, insbesondere Lamellen auf, um den Zugang zum Stauraum zu verbessern und/oder einen zusätzlichen Ablageboden bereit zu stellen. Die Lamellen können insbesondere im zusammen geschobenen Zustand, wenn die Lamellen untereinander, übereinander, hintereinander und/oder ineinander angeordnet sind, unterhalb des Spoilers angeordnet werden, so dass die Lamellen im Wesentlichen in dem zwischen dem Spoiler und dem Basisdach spitz zulaufenden Bereich in einen kompakten Zustand angeordnet werden können. Die zusammen geschobenen Lamellen sind in diesem Fall in einem Volumen des Stauraums angeordnet, der zum Beladen und Entladen des Stauraums in der Regel am wenigsten benötigt wird.

Vorzugsweise weist das Kraftfahrzeugdach mindestens eine mit der Betätigungseinrichtung verbundene Antriebseinheit auf. Die Betätigungseinrichtung und/oder die mindestens eine Antriebseinheit sind insbesondere mit einem linken Dachholm und/oder mit einem rechten Dachholm der Kraftfahrzeugkarosserie verbindbar bzw. verbunden. Da die Dachholme als Strukturbauteile der Kraftfahrzeugkarosserie im Vergleich zu anderen Karosseriebauteilen größere Kräfte aufnehmen können, kann sich die Betätigungseinrichtung ohne Probleme an den Dachholmen abstützen, um den Spoiler zu betätigen. Entsprechend können die mindestens eine Betätigungsvorrichtung und/oder die Antriebseinheit auch mit mindestens einem Dachspriegel verbunden sein, der insbesondere mit den Dachholmen mittelbar oder unmittelbar verbunden sein kann.

Besonders bevorzugt sind mindestens zwei Betätigungseinrichtungen vorgesehen. Beispielsweise ist die eine Betätigungseinrichtung mit dem linken Dachholm verbunden und die andere Betätigungseinrichtung mit dem rechten Dachholm. Besonders bevorzugt sind die mindestens zwei Betätigungseinrichtungen mit genau einer Antriebseinheit verbunden, wobei die Antriebseinheit pneumatisch oder hydraulisch oder elektromagnetisch, beispielsweise mit einem Aktuator oder Linearmotor, betätigt werden kann. Zusätzlich oder alternativ kann der Antrieb der Antriebseinheit manuell, beispielsweise mit Hilfe einer Handkurbel, erfolgen. Um die Verbindungsmittel zwischen der Antriebseinheit und der Betätigungseinrichtung möglichst kurz und kostengünstig ausbilden zu können, ist die Antriebseinheit vorzugsweise mit einem quer ausgerichteten Dachspriegel verbunden, der insbesondere zwischen dem linken Dachholm und dem rechten Dachholm verläuft. Insbesondere ist die Antriebseinheit mittig angeordnet, so dass zur Verbindung der Antriebseinheit mit der einen Betätigungseinrichtung und der anderen Betätigungseinrichtung die gleichen Verbindungsmittel verwendet werden können. Es ist auch möglich die Dachholme und die Dachspriegel zu vertauschen, so dass die Betätigungsvorrichtungen mit den Dachspriegeln und die Antriebseinheit mit dem Dachholm verbunden sind.

Vorzugsweise sind die Betätigungseinrichtung und/oder die Antriebseinrichtung im Wesentlichen vollständig geodätisch unterhalb des Spoilers angeordnet. Dadurch sind die Betätigungseinrichtung und/oder die Antriebseinrichtung vor Umwelteinflüssen geschützt. Gleichzeitig wird kein Bauraum benötigt, der das Volumen des Kraftfahrzeuginnenraums beeinträchtigen könnte. Die Antriebseinrichtung kann aber auch mittig zum Kraftfahrzeug oder im Heckbereich des Kraftfahrzeugs angeordnet sein.

Besonders bevorzugt weist die Betätigungseinrichtung mindestens einen Betätigungshebel auf, der insbesondere über ein Gelenk am Spoiler angelenkt ist. An der dem Gelenk gegenüberliegenden Seite des Betätigungshebels ist der Betätigungshebel verschiebbar ausgeführt. Insbesondere ist der Hebel hierzu am und/oder im Dachholm oder Dachspriegel verschiebbar geführt. Vorzugsweise ist der Dachholm bzw. Dachspriegel zumindest teilweise als Hohlprofil ausgeführt, so dass sich innerhalb des Dachholms bzw. Dachspriegels automatisch eine Führung für den Betätigungshebel ergibt, der beispielsweise mit Hilfe einer angetriebenen Gewindestange in horizontaler Richtung verschoben werden kann, um das Dachsegment zu öffnen oder zu schließen.

Vorzugsweise ist der Betätigungshebel um eine Drehachse drehbar, die zur Schwenkachse des Spoilers beabstandet angeordnet ist. Ferner ist der Betätigungshebel beabstandet zur Schwenkachse mit dem Spoiler verbunden, so dass die zum Bewegen des Spoilers erforderliche Kraft geringer ist. Hierbei kann der Betätigungshebel beispielsweise auf der Unterseite des Spoilers beispielsweise mit Hilfe eines am Spoiler geführten Schlittens entlanggleiten.

Der Hebel kann insbesondere mindestens zwei gelenkig gelagerte und miteinander verbundene Hebelteile aufweisen. Dadurch kann auf besonders kleinem Raum eine Übersetzung erreicht werden, die eine Bewegung des Spoilers über die gesamte Höhe des vorgesehenen Schwenkradius ermöglicht. Ferner kann durch die Hebelteile ein Kniehebel ausgebildet werden, um durch eine im Wesentlichen geringfügige Bewegung des gemeinsamen Gelenks zwischen den Hebelteilen den Spoiler zu verschwenken.

Besonders bevorzugt sind die Betätigungshebel von mindestens zwei Betätigungseinrichtungen über eine insbesondere um die Drehachse der Betätigungshebel drehbare Stange miteinander verbunden. Dadurch ist es möglich die mindestens zwei Betätigungseinrichtungen mit genau einer Antriebseinheit zu betätigen, indem lediglich die Stange gedreht wird.

Um ein möglichst vertikales Öffnen des Dachsegments zu ermöglichen kann der Spoiler in Fahrtrichtung verschiebbar ausgeführt sein. Insbesondere sind der Spoiler und/oder die Betätigungseinrichtung und/oder die Antriebseinrichtung gemeinsam relativ zum Basisdach verschiebbar.

Vorzugsweise ist mindestens eine Verriegelungseinrichtung vorgesehen, um den Spoiler und/oder das Dachsegment insbesondere in verschiedenen Positionen arretieren zu können. Hierzu kann beispielsweise ein Rastmechanismus vorgesehen sein oder eine Bremse, die den Spoiler und/oder das Dachsegment insbesondere stufenlos feststellen kann. Besonders bevorzugt kann die Verriegelungseinrichtung ferngesteuert betätigt werden. Dadurch ist es beispielsweise möglich mit einem Fernbedienungsimpuls eines Kraftfahrzeugschlüssels den Spoiler und/oder das Dachsegment zu entriegeln oder zu verriegeln. Zusätzlich bzw. alternativ kann der Spoiler und/oder das Dachsegment beispielsweise elektrisch aus dem Kraftfahrzeuginnenraum betätigt werden. Hierzu ist beispielsweise in der Fahrerkonsole ein entsprechender Schaltmechanismus vorgesehen.

Um ein sich gegebenenfalls zwischen dem Spoiler und dem Dachsegment ergebenes sich veränderndes Spaltmaß auszugleichen, kann zwischen dem Dachsegment und dem Spoiler ein Längenausgleich vorgesehen sein. Der Längenausgleich wird beispielsweise über ein flexibles, insbesondere gummielastisches Material erreicht, das gleichzeitig Regenwasser abweisen kann. Um eine kinematische Verbindung zwischen dem Spoiler und dem Dachsegment zu gewährleisten, können das Dachsegment und der Spoiler über einen in Längsrichtung verschiebbaren Schiebehebel verbunden sein.

Vorzugsweise ist mindestens eine Stützeinrichtung zum Abstützen des Dachsegments vorgesehen, damit ein Teil der auftretenden Gewichtskräfte nicht nur von der Betätigungseinrichtung sondern auch von der Stützeinrichtung aufgenommen werden können. Die Stützeinrichtung kann wie vorstehend anhand der Betätigungseinrichtung beschrieben aus- und weitergebildet sein.

Vorzugsweise erstreckt sich das Dachsegment von dem linken Dachholm bis zum rechten Dachholm, wodurch über die gesamte Breite des Kraftfahrzeugsdachs der Stauraum erforderlichenfalls vergrößert werden kann.

Um den Stauraum vor Umwelteinflüssen zu schützen, kann mit dem Dachsegment und mit dem Basisdach eine flexible Schutzhülle verbunden sein. Die Schutzhülle kann beispielsweise derart ausgestaltet sein, dass sie im eingefahrenen Zustand des Dachsegments zusammengefaltet ist und im ausgefahrenen Zustand Seitenwände des Stauraums ausbildet. Ferner kann die Schützhülle Öffnungsmittel aufweisen, um die Schutzhülle in einem Teilbereich öffnen zu können. Beispielsweise weist die Schutzhülle einen Reißverschluss auf, um den entgegen der Fahrtrichtung weisenden Teil der Schutzhülle öffnen zu können, so dass besonders lange Gegenstände, wie beispielsweise Surfbretter ohne zusätzliche Probleme transportiert werden können.

Besonders bevorzugt weist das Dachsegment im maximal geöffneten Zustand zum Basisdach ein vertikalen Abstand von ≥ 10,0 cm, insbesondere ≥ 30,0 cm, vorzugsweise ≥ 50,0 cm, besonders bevorzugt ≥ 80,0 cm auf. Durch diese Dimensionierung des Abstands des Dachsegments zum Basisdach, wobei der Abstand jeweils von der Oberfläche des Dachsegments zur Oberfläche des Basisdachs gemessen wird, wird einem Volumen für den Stauraum erreicht, das groß genug ist, um Gegenstände, insbesondere Gepäckstücke oder sperrige Gegenstände, lagen zu können.

Damit auch neben dem beweglichen Dachsegment Gegenstände mit dem Kraftfahrzeugdach verbunden werden können, ohne dass das sich bewegende Dachsegment an den bereits befestigten Gegenständen anstoßen kann, ist es bevorzugt einen Versatz des Dachsegments in horizontaler Richtung möglichst gering zu halten. Hierzu kann das Dachsegment im maximal geöffneten Zustand im Vergleich zum geschlossenen Zustand ein Versatz in horizontaler Richtung von ≤ 10,0 cm, insbesondere ≤ 5,0 cm, vorzugsweise ≤ 2,0 cm, besonders bevorzugt ≤ 1,0 cm und weiter bevorzugt ≤ 0,5 cm aufweisen. Durch diese Dimensionierung des Versatzes wird die Funktionalität des Kraftfahrzeugdachs zum Transport weiterer Gegenstände auf dem Kraftfahrzeugdach nicht wesentlich eingeschränkt, wobei gleichzeitig mehrere alternative Betätigungseinrichtungen zur Bewegung des Dachsegments je nach beabsichtigtem Anwendungsfall ausgewählt werden können.

Die Erfindung betrifft ferner eine Kraftfahrzeugkarosserie, die insbesondere für Vans, Kombis oder Kleinbusse vorgesehen ist und ein Kraftfahrzeugdach aufweist, das wie vorstehend beschrieben aus- und weitergebildet sein kann. Vorzugsweise sind ein linker Dachholm und ein rechter Dachholm vorgesehen, so dass das Kraftfahrzeugdach als einzelnes Modul sicher mit der Kraftfahrzeugkarosserie verbunden werden kann. Das Kraftfahrzeugdach kann insbesondere mit den Dachholmen abschließen, so dass die Dachholme den das Basisdach begrenzen. Das Dachsegment erstreckt sich insbesondere von dem linken Dachholm zum rechten Dachholm. Insbesondere sind eine rechte Reling und eine linke Reling vorgesehen, mit deren Hilfe auf dem Kraftfahrzeugdach Gepäckstücke und sperrige Gegenstände befestigt werden können. Vorzugsweise weist das Dachsegment im maximal geöffneten Zustand zu der Oberfläche des Basisdachs einen Abstand auf, der größer ist als das 1,5 -fache, insbesondere 2,0 -fache, vorzugsweise 3,5 -fache und besonders bevorzugt das 5,0 -fache des Abstands der Oberfläche der Dachreling zur Oberfläche des Basisdachs. Durch diese Dimensionierung des Abstands des Dachsegments zum Basisdach kann durch das Dachsegment ein zusätzliches Befestigungsmittel ausgebildet werden, mit deren Hilfe ein zu transportierender Gegenstand auf dem Kraftfahrzeugdach sicher befestigt, insbesondere verschnürt werden kann. Beispielsweise kann der mit den Dachrelings verbundene Transportgegenstand durch das ausgefahrene Dachsegment vor Fahrtwind geschützt werden. Besonders bevorzugt befindet sich die Oberfläche des Dachsegments auf der im Wesentlichen gleichen Höhe wie die Oberfläche der Dachreling, so dass der Luftwiderstand quer zur Fahrtrichtung im Wesentlichen nicht erhöht ist und gleichzeitig eine Vertiefung im Dachhimmel und/oder im Basisdach zur Aufnahme des Dachsegments nicht erforderlich ist.

Vorzugsweise ist bei der Kraftfahrzeugkarosserie mindestens eine mit einer Betätigungseinrichtung zur Bewegung des Spoilers verbundene Antriebseinheit mit dem Dachholm und/oder mit einem Dachspriegel verbunden ist, wobei der Dachspriegel insbesondere mit dem linken Dachholm und/oder dem rechten Dachholm zumindest mittelbar verbunden ist. Die Antriebseinheit kann dadurch sicher mit einem Strukturbauteil der Kraftfahrzeugkarosserie verbunden werden und zum Antrieb von mehr als einer Betätigungseinrichtung ausgelegt werden.

Insbesondere ist mindestens eine Stützeinrichtung zum Abstützen des Dachsegments vorgesehen, wobei die Stützeinrichtung insbesondere mit dem linken Dachholm und/oder dem rechten Dachholm verbunden ist oder mit einem vorderen zwischen den Dachholmen verlaufenden Dachspriegel und/oder einem hinteren zwischen den Dachholmen verlaufenden Dachspriegel verbunden ist. Die Stützeinrichtung kann sich dadurch an besonders stabilen Bauteilen der Kraftfahrzeugkarosserie abstützen. Vorzugsweise weist die Stützeinrichtung mindestens einen über ein Gelenk am Basisdach oder am Dachsegment angelenkten Hebel auf, wobei der Hebel an einer dem Gelenk gegenüberliegenden Seite, insbesondere am und/oder im Dachholm in horizontaler Richtung oder am und/oder im Dachspriegel in Querrichtung verschiebbar ist. Der angelenkte Hebel kann dadurch entlang eines Stabilen Bauteils verschoben werden, das sich unter der Belastung des Hebels nicht durchbiegt, wodurch ein Klemmen vermieden ist. Vorzugsweise ist der Hebel insbesondere stufenlos mit Hilfe einer Feststelleinrichtung arretierbar. Das Dachsegment kann dadurch in verschiedenen Zwischenstellungen arretiert werden. Nachfolgend wird die Erfindung unter Bezugnahme auf die anliegenden Zeichnungen anhand bevorzugter Ausführungsbeispiele näher erläutert.

Es zeigen:
- Fig. 1:: eine schematische perspektivische Ansicht eines Kraftfahrzeugs mit dem erfindungsgemäßen Kraftfahrzeugdach,
- Fig. 2:: eine schematische perspektivische Ansicht eines Kraftfahrzeugdachs in einer ersten Ausführungsform,
- Fig. 3:: eine schematisch perspektivische Ansicht eines Kraftfahrzeugdachs in einer zweiten Ausführungsform
- Fig. 4:: eine schematische perspektivische Ansicht eines erfindungsgemäßen Kraftfahrzeugdachs in einer dritten Ausführungsform.

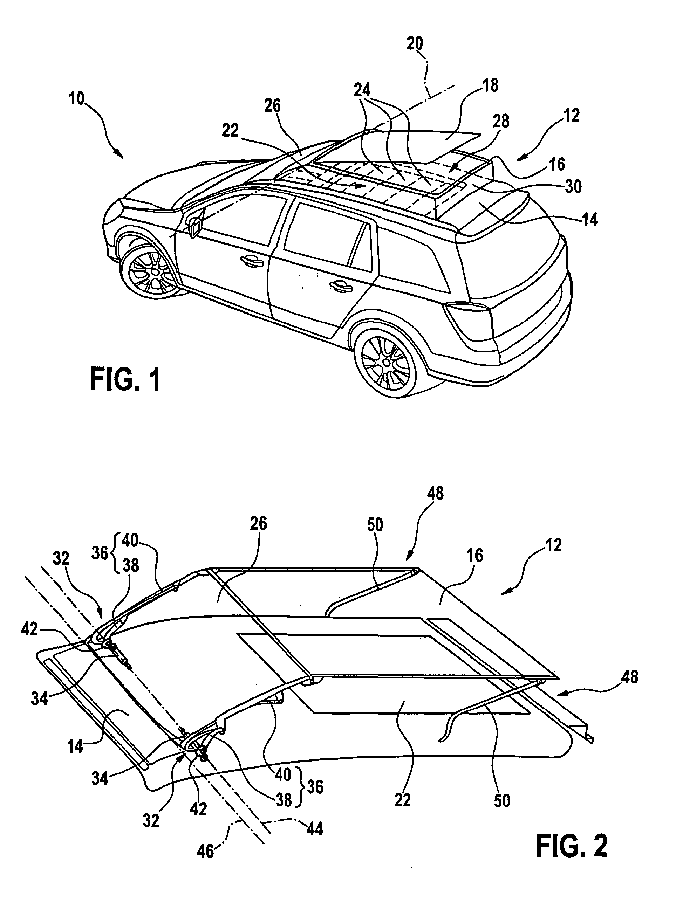

Ein in Fig. 1 dargestelltes Kraftfahrzeug 10 weist ein Kraftfahrzeugdach 12 auf, das ein Basisdach 14 und ein im Wesentlichen in vertikaler Richtung bewegbares Dachsegment 16 aufweist. Im dargestellten Ausführungsbeispiel weist das Dachsegment 16 ein oberes Dachelement 18 auf, das an einer Stirnseite um eine quer zur Fahrtrichtung des Kraftfahrzeugs 10 angeordnete Schwenkachse 20 aufklappbar angeordnet ist. Alternativ kann das obere Dachelement 18 auch mehrere Teile aufweisen, die beispielsweise lamellenartig übereinander, untereinander oder ineinander zusammen geschoben werden können.

Im dargestellten Ausführungsbeispiel weist das Basisdach 14 ein unteres Dachelement 22 auf, das mehrere Lamellen 24 aufweist, die in Fahrtrichtung und/oder entgegen der Fahrtrichtung übereinander, untereinander oder ineinander zusammen geschoben werden können. Um den Luftwiderstand im ausgefahrenen Zustand des Dachsegments 16 zu reduzieren, ist das Dachsegment 16 mit einem Spoiler 26 verbunden, der bei der Bewegung des Spoilers 26 das Dachsegment 16 automatisch mitbewegt. Das obere Dachelement 16 und/oder das untere Dachelement 22 sowie der Spoiler 26 können zumindest teilweise transparent ausgestaltet sein, um eine Beleuchtung des Kraftfahrzeuginnenraums durch Sonnenlicht zu ermöglichen. Im dargestellten Ausführungsbeispiel ist das obere Dachelement 16 vergleichbar zu einem Fenster transparent ausgestaltet, während die Lamellen 24 des unteren Dachelements undurchsichtig ausgestaltet sind, um erforderlichenfalls als Sonnenschutz zu dienen.

Das untere Dachelement 22 ist insbesondere derart angeordnet, dass es mit dem an der Unterseite des Basisdachs 14 angeordneten Dachhimmel des Kraftfahrzeugs 10 fluchtet. Alternativ zu der in Fig. 1 dargestellten Ausführungsform kann das untere Dachelement 22 vergleichbar zu einem Fensterrollo ausgestaltet sein. Ferner kann das untere Dachelement 22 auch als Hartschale und/oder Gitternetz ausgeführt sein.

Der Abstand des Dachsegments 16 zum Basisdach 14 ist im geöffneten, das heißt ausgefahrenen Zustand derart dimensioniert, dass ein Stauraum 28 mit einem Volumen ausbildet wird, das groß genug ist Gepäckstücke und/oder sperrige Gegenstände aufzunehmen. Der Stauraum 28 weist insbesondere ein Volumen von mindestens 100 Litern, vorzugsweise 200 Litern und besonders bevorzugt 300 Litern auf. Insbesondere ist es in den dargestellten Ausführungsbeispielen möglich sowohl das Transportvolumen des Kraftfahrzeuginnenraums als auch das Transportvolumen des Stauraums 28 für den Transport eines Gegenstands zu verwenden, da der Gegenstand von dem Kraftfahrzeuginnenraum in den Stauraum 28 hineinragen kann, wenn das untere Dachelement 22 geöffnet ist.

Zwischen dem Dachsegment 16 und dem Basisdach 14 kann ferner eine flexible Schutzhülle 30 vorgesehen sein, um den Stauraum 28 vor Umwelteinflüssen zu schützen. Die Schutzhülle 30 ist insbesondere derart ausgestaltet, dass sie im eingefahrenen Zustand des Dachsegments 16 sich automatisch zusammenfaltet.

Bei der in Fig. 2 dargestellten Ausführungsform des Kraftfahrzeugdachs 12 sind zwei mit dem Spoiler 26 verbundene Betätigungseinrichtungen 32 vorgesehen, die jeweils von einer Antriebseinheit 34 angetrieben werden. Die Betätigungseinrichtung 32 weist einen Betätigungshebel 36 mit einem ersten Hebelteil 38 und einem gelenkig mit dem ersten Hebelteil 38 verbundenen zweiten Hebelteil 40 auf, um auf kompakten Raum eine Übersetzung zu erreichen. Im dargestellten Ausführungsbeispiel sind die Antriebseinheiten 34 elektrisch ausgeführt und über eine Zahnradverbindung 42 mit dem ersten Hebelteil 38 verbunden. Die Betätigungshebel 36 sind um eine Drehachse 44 drehbar, die zu einer Schwenkachse 46 des Spoilers 26 beabstandet angeordnet ist.

Ferner ist mit dem Dachsegment 16 eine Stützeinrichtung 48 verbunden. Die Stützeinrichtung 48 weist einen in einem nicht dargestellten Dachholm geführten Hebel 50 auf, der gelenkig mit dem Dachsegment 16 verbunden ist.

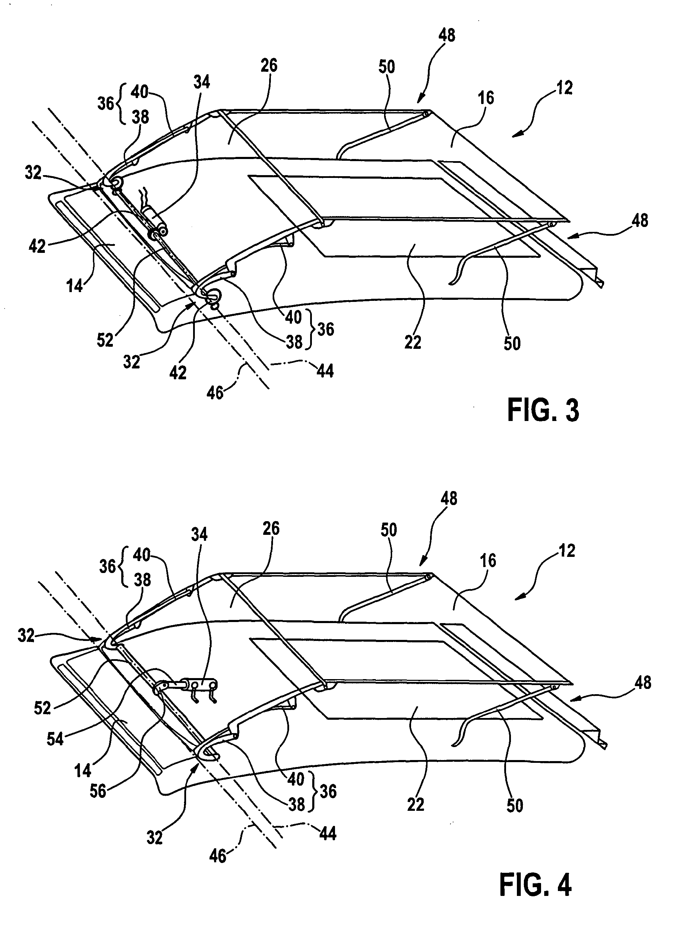

Bei dem in Fig. 3 dargestellten Ausführungsbeispiel ist im Vergleich zu dem in Fig. 2 dargestellten Ausführungsbeispiel genau eine Antriebseinheit 34 vorgesehen, die über eine Stange 52 beide Betätigungseinrichtungen 32 antreibt. Die Antriebseinheit 34 ist hierbei ebenfalls über eine Zahnradverbindung 42 mit der Stange 52 verbunden.

Bei dem in Fig. 4 dargestellten Ausführungsbeispiel ist im Vergleich zu dem in Fig. 3 dargestellten Ausführungsbeispiel die Antriebseinheit 34 pneumatisch oder hydraulisch ausgestaltet. Ferner fällt die Drehachse der Stange 52 mit der Drehachse 44 der Betätigungseinrichtungen 32 zusammen, da die Betätigungshebel 36 direkt mit der Stange 52 verbunden sind. Die Antriebseinheit weist einen linear bewegten Kolben 54 auf, der über einen Zwischenhebel 56 die Stange 52 dreht.

### Bezugszeichenliste

- 10: Kaftfahrzeug
- 12: Kraftfahrzeugdach
- 14: Basisdach
- 16: Dachsegment
- 18: oberes Dachelement
- 20: Schwenkachse
- 22: unteres Dachelement
- 24: Lamelle
- 26: Spoiler
- 28: Stauraum
- 30: Schutzhülle
- 32: Betätigungseinrichtung
- 34: Antriebseinheit
- 36: Betätigungshebel
- 38: erstes Hebelteil
- 40: zweites Hebelteil
- 42: Zahnradverbindung
- 44: Drehachse
- 46: Schwenkachse
- 48: Stützeinrichtung
- 50: Hebel
- 52: Stange
- 54: Kolben
- 56: Zwischenhebel

## Patentansprüche

**1.** Kraftfahrzeugdach umfassend
ein Basisdach (14) und
ein relativ zum Basisdach (14) bewegbares Dachsegment (16), das im geschlossenen Zustand am Basisdachs (14) im Wesentlichen anliegt und im geöffneten Zustand zum Basisdach (14) beabstandet angeordnet ist,
**dadurch gekennzeichnet, dass**
ein mit dem Basisdach (14) beweglich verbundener Spoiler (26) vorgesehen ist,
wobei der Spoiler (26) derart kinematisch mit dem Dachsegment (16) verbunden ist, dass durch die Bewegung des Spoilers (26) das Dachsegment (16) geöffnet und geschlossen wird, wobei im geöffneten Zustand ein zusätzlicher Stauraum (28) zur Aufnahme von Gepäckstücken ausbildet ist.

**2.** Kraftfahrzeugdach nach Anspruch 1 **dadurch gekennzeichnet, dass** der Spoiler (26) um eine Schwenkachse (46) relativ zum Basisdach (14) schwenkbar ist.

**3.** Kraftfahrzeugdach nach Anspruch 1 oder 2 **dadurch gekennzeichnet, dass** eine mit dem Spoiler (26) verbundene Betätigungseinrichtung (32) zum Bewegen des Spoilers (26) vorgesehen ist.

**4.** Kraftfahrzeugdach nach Anspruch 3 oder 4 **dadurch gekennzeichnet, dass** mindestens zwei Betätigungseinrichtungen (32) vorgesehen sind, die mit genau einer Antriebseinheit (34) verbunden sind.

**6.** Kraftfahrzeugdach nach einem der Ansprüche 3 bis 5 **dadurch gekennzeichnet, dass** die Betätigungseinrichtung (32) einen um eine Drehachse (44) drehbaren Betätigungshebel (36) aufweist, wobei die Drehachse (44) zur Schwenkachse (46) beabstandet angeordnet ist und der Betätigungshebel (36) an einer zur Schwenkachse (46) beabstandeten Stelle mit dem Spoiler (26) verbunden ist.

**7.** Kraftfahrzeugdach nach Anspruch 6 **dadurch gekennzeichnet, dass** die Betätigungshebel (36) von mindestens zwei Betätigungseinrichtungen (32) über eine drehbare Stange (52) miteinander verbunden sind.

**8.** Kraftfahrzeugdach nach Anspruch 6 oder 7 **dadurch gekennzeichnet, dass** der Betätigungshebel (36) einen ersten Hebelteil (38) und einen gelenkig mit dem ersten Hebelteil (38) verbundenen zweiten Hebelteil (40) aufweist und insbesondere der erste Hebelteil (38) oder der zweite Hebelteil (40) gelenkig mit dem Spoiler (26) verbunden ist.

**9.** Kraftfahrzeugdach nach einem der Ansprüche 3 bis 8 **dadurch gekennzeichnet, dass** die Betätigungseinrichtung (32) und/oder die Antriebseinrichtung (34) im Wesentlichen vollständig geodätisch unterhalb des Spoilers (26) angeordnet sind.

**10.** Kraftfahrzeugdach nach einem der Ansprüche 3 bis 9 **dadurch gekennzeichnet, dass** der Spoiler (26) und die Betätigungseinrichtung (32) gemeinsam relativ zum Basisdach (14) in Fahrtrichtung verschiebbar sind.

**11.** Kraftfahrzeugdach nach einem der Ansprüche 1 bis 12 **dadurch gekennzeichnet, dass** das Dachsegment (16) mindestens ein oberes relativ beweglich mit dem Dachsegment (16) verbundenes Dachelement (18) und/oder das Basisdach (14) mindestens ein unteres relativ beweglich mit dem Basisdach (14) verbundenes Dachelement (22) aufweisen, um den Stauraum (28) zu öffnen und zu schließen.

**12.** Kraftfahrzeugdach nach Anspruch 11 **dadurch gekennzeichnet, dass** das Dachelement (18, 22) Lamellen (24) aufweist, die untereinander und/oder übereinander und/oder ineinander zusammenschiebbar sind, wobei insbesondere die Lamellen (24) im zusammengeschobenen Zustand unterhalb des Spoilers (26) angeordnet sind.

**15.** Kraftfahrzeugdach nach einem der Ansprüche 1 bis 14 **dadurch gekennzeichnet, dass** das Dachsegment (16) im maximal geöffneten Zustand zum Basisdach (14) einen vertikaler Abstand von ≥ 10,0 cm, insbesondere ≥ 30,0 cm, vorzugsweise ≥ 50,0 cm und besonders bevor-zugt ≥ 80,0 cm aufweist.

**16.** Kraftfahrzeugdach nach einem der Ansprüche 1 bis 15 **dadurch gekennzeichnet, dass** das Dachsegment (16) im maximal geöffneten Zustand im Vergleich zum geschlossenen Zustand einen Versatz in horizontaler Richtung von ≤ 10,0 cm, insbesondere ≤ 5,0 cm, vorzugsweise ≤ 2,0 cm, besonders bevorzugt ≤ 1,0 cm und weiter bevorzugt ≤ 0,5 cm aufweist.

**17.** Kraftfahrzeugkarosserie, insbesondere für Vans, Kombis (10) oder Kleinbusse, mit einem Kraftfahrzeugdach (12) nach einem der Ansprüche 1 bis 16, wobei insbesondere eine rechte Reling und eine linke Reling vorgesehen sind und das Dachsegment (16) im maximal geöffneten Zustand zum Basisdach (14) einen Abstand aufweist, der größer ist als das 1,5-fache, insbesondere 2,0-fache, vorzugsweise 3,5-fache und besonders bevorzugt das 5,0-fache des Abstands der Oberfläche der Dachreling zur Oberfläche des Basisdachs (14).

**18.** Kraftfahrzeugkarosserie nach Anspruch 19, **dadurch gekennzeichnet, dass** ein linken Dachholm und ein rechter Dachholm vorgesehen sind und das Basisdach (14) mit den Dachholmen verbunden ist und insbesondere seitlich mit den Dachholmen abschließt.
